# EUROPEAN PATENT SPECIFICATION

(11) **EP 3 343 051 B1**
(45) Date of publication and mention of the grant of the patent: **04.12.2019**
(21) Application number: 16838748.8
(22) Date of filing: 22.07.2016
(51) Int. Cl.: F16C 19/36, F16C 33/64, F16C 35/07, F16C 43/08, F16C 33/58, F16C 33/60

(54) **SLEWING BEARING**
GROSSWÄLZLAGER
PALIER PIVOTANT

(30) Priority: 26.08.2015 JP 2015167190
(43) Date of publication of application: 04.07.2018
(73) Proprietor: THK CO., LTD., Minato-ku Tokyo 108-8506 (JP)
(72) Inventor: SAKAI, Junichi, Tokyo 108-8506 (JP); HOSHIDE, Kaoru, Tokyo 108-8506 (JP); MAKI, Nobuyuki, Tokyo 108-8506 (JP); ITO, Masato, Tokyo 108-8506 (JP); OZAKI, Tomoya, Tokyo 108-8506 (JP)
(74) Representative: Grünecker Patent- und Rechtsanwälte PartG mbB
(86) International application number: PCT/JP2016/003423
(87) International publication number: WO 2017/033396

(56) References cited:
- EP-A1- 0 339 630
- BE-A- 426 831
- JP-A- H0 960 647
- JP-A- H0 960 647
- JP-A- S62 292 919
- JP-A- S62 292 919
- JP-A- 2011 075 091
- JP-A- 2011 185 364
- JP-A- 2013 164 093
- JP-A- 2013 164 093
- JP-A- 2014 043 872
- JP-A- 2014 043 872
- US-A- 3 374 040

## Description

### TECHNICAL FIELD

The present invention relates to a slewing bearing, and particularly to a slewing bearing having a structure that can be manufactured at low cost.

### BACKGROUND ART

As is conventionally well known, there has been widely and generally used a slewing bearing configured such that members disposed on an inner peripheral side and on an outer peripheral side relatively rotate around an axis to support a rotating object. A specific configuration example of this type of slewing bearing is exemplified in the following Patent Literatures 1 and 2, for example. The slewing bearings disclosed in these prior art documents are configured as double row roller bearings, and are configured such that two rolling passages for rollers are formed along a circumferential direction between an outer ring and an inner ring, a plurality of rollers is arranged in the rolling passages, and the rollers revolve while rotating in these rolling passage in accordance with a relative rotational movement of the inner ring and the outer ring.

Further bearings are described in EP 0 339 630 A1, JP 2014 043872 A, US 3 374 040 A and BE 426 831 A. EP 0 339 630 A1 discloses a slewing bearing according to the preamble of claim 1.

### CITATION LIST

### PATENT LITERATURE

Patent Literature 1: JP H05 44720 A
Patent Literature 2: JP 2002-13540 A

### DISCLOSURE OF THE INVENTION

### PROBLEMS TO BE SOLVED BY THE INVENTION

In the slewing bearings represented by the aforementioned Patent Literatures 1 and 2 and the like, the inner ring and the outer ring, which are component members, are generally manufactured by performing cutting work or the like on bearing steel such as SUJ2. That is, since the slewing bearings are often used for mechanical element parts required to have a high level of safety, there is used bearing steel, which is a metal material with high hardness. However, this bearing steel is a hard-to-work material due to its high hardness, and there has been a limit in reducing manufacturing cost. In a recent industry, however, there has been a growing demand for cost reduction, and if it is possible to achieve a slewing bearing that can be manufactured at low cost while maintaining a certain performance, it is preferable since an application range of slewing bearings can be expanded.

The present invention has been made in view of the above-described cases, and an object of the present invention is to provide a new slewing bearing that has been unavailable in the conventional technology and has a structure that can be manufactured at low cost while maintaining a certain performance.

### MEANS FOR SOLVING THE PROBLEMS

In particular, a slewing bearing is provided having the features defined in claim 1. Further preferred embodiments are defined in the dependent claims.

### EFFECTS OF THE INVENTION

According to the slewing bearing of the present invention, it is possible to provide a new slewing bearing that has been unavailable in the conventional technology and has a structure that can be manufactured at low cost while maintaining a certain performance.

### BRIEF DESCRIPTION OF THE DRAWINGS

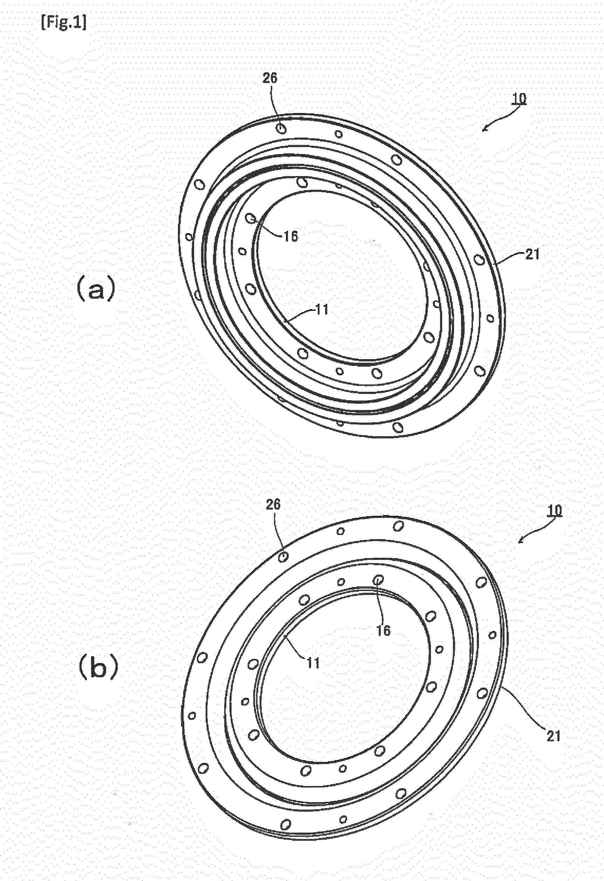

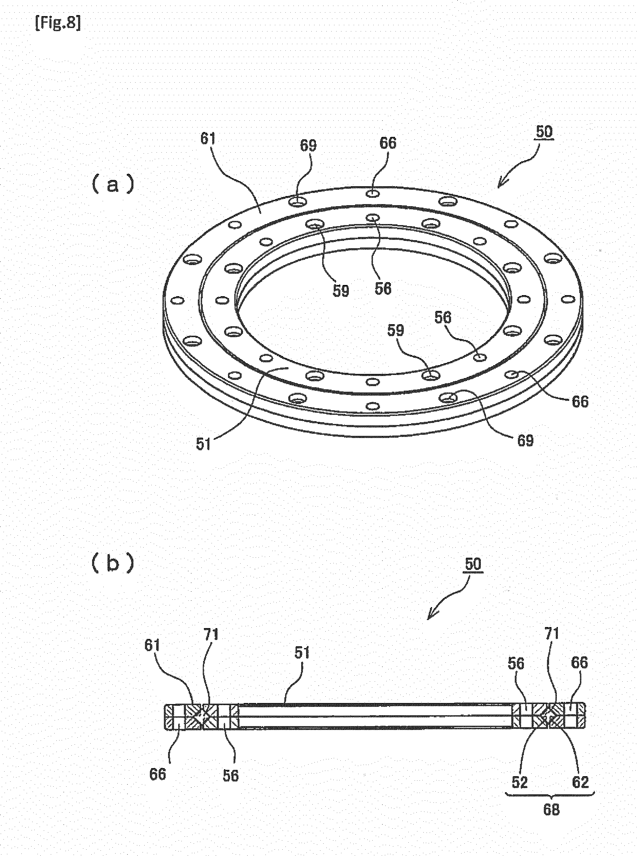

Fig. 1 is a view illustrating an appearance shape of a slewing bearing according to a first arrangement part of the invention, wherein
Fig. 1(a) in the figure illustrates a perspective view of an upper surface side, and Fig. 1(b) illustrates a perspective view of a bottom surface side.

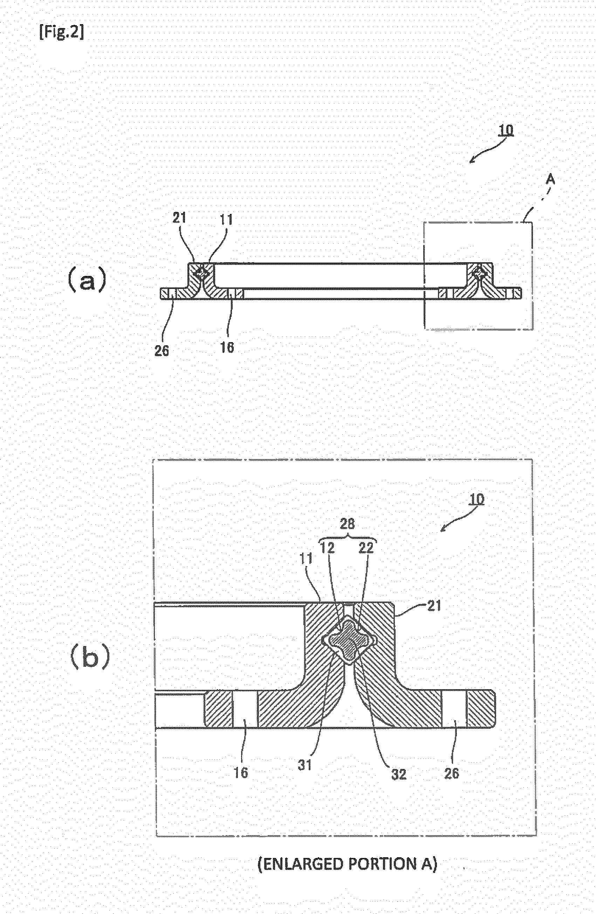

Fig. 2 is a cross-sectional view for describing a structure of the slewing bearing according to the first arrangement, wherein Fig. 2(a) in the figure illustrates a sectional view cut along a central portion of the slewing bearing, and Fig. 2(b) illustrates an enlarged view of a portion A in Fig. 2(a).

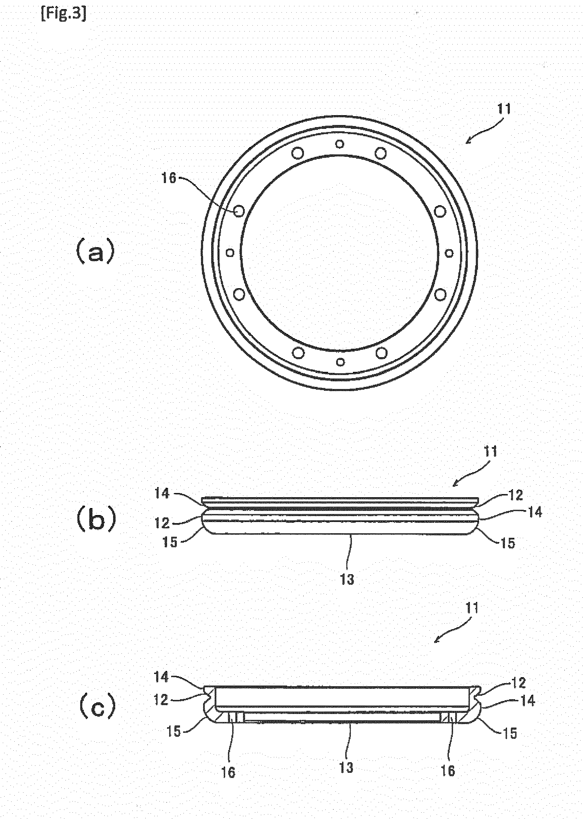

Fig. 3 is a view illustrating a single inner ring that constitutes the slewing bearing according to the first arrangement, wherein Fig. 3(a) in the figure illustrates a top view, Fig. 3(b) illustrates a side view, and Fig. 3(c) illustrates a sectional view cut along a central portion of the inner ring.

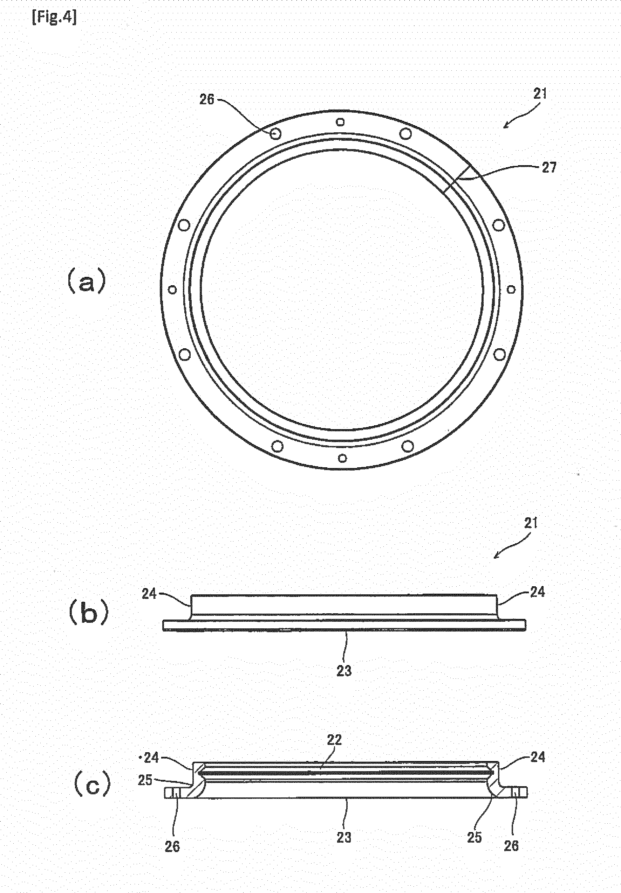

Fig. 4 is a view illustrating a single outer ring that constitutes the slewing bearing according to the first arrangement, wherein Fig. 4(a) in the figure illustrates a top view, Fig. 4(b) illustrates a side view, and Fig. 4(c) illustrates a sectional view cut along a central portion of the outer ring.

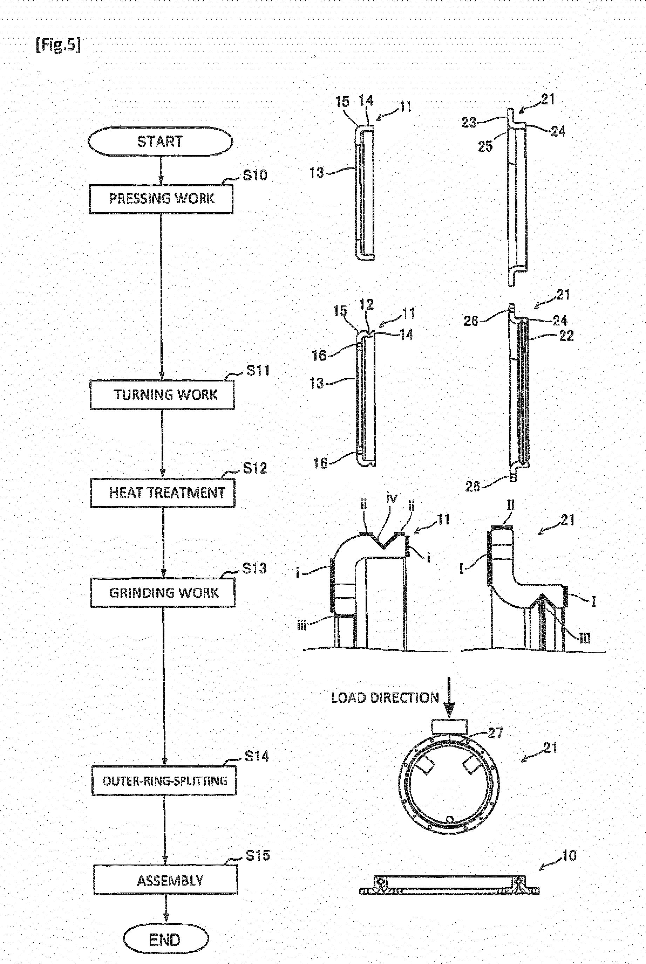

Fig. 5 is a view for describing a method of manufacturing the slewing bearing according to the first arrangement, illustrating a flowchart indicating each process, and a schematic view for each process corresponding to this flowchart.

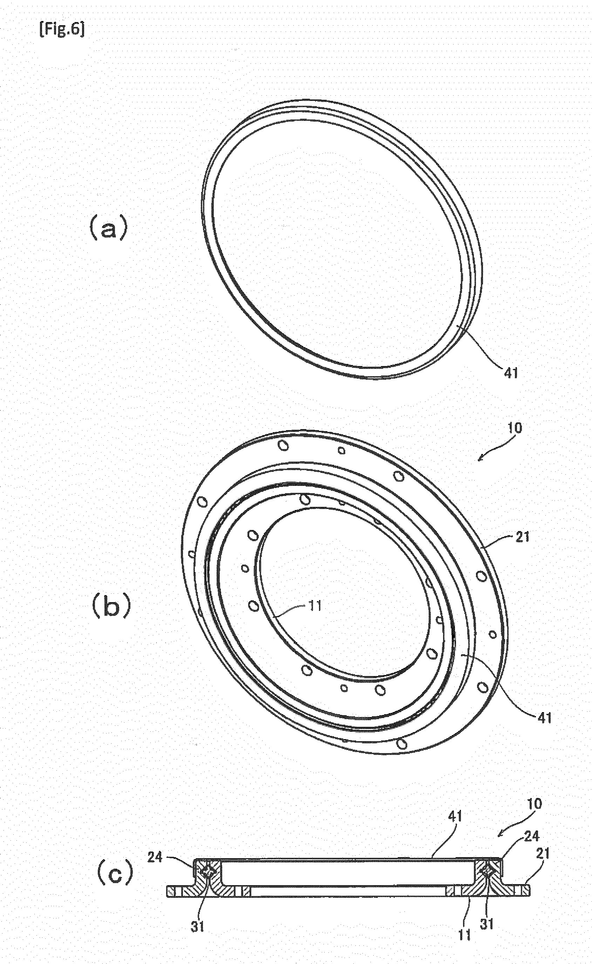

Fig. 6 is a view illustrating an opening-prevention plate applicable to the slewing bearing according to the first arrangement, wherein Fig. 6(a) in the figure illustrates an external perspective view of a single opening-prevention plate, Fig. 6(b) illustrates a state of the opening-prevention plate attached to the slewing bearing, and Fig. 6(c) illustrates a sectional view of the slewing bearing to which the opening-prevention plate is attached.

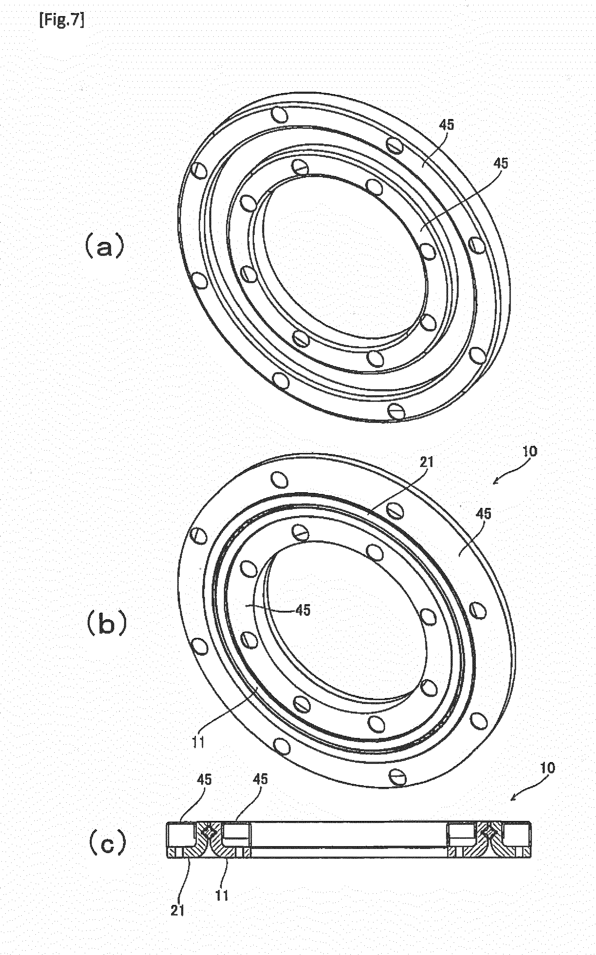

Fig. 7 is a view illustrating a jacket member applicable to the slewing bearing according to the first arrangement, wherein Fig. 7(a) in the figure illustrates an external perspective view of jacket members alone (two jacket members for the inner ring and the outer ring are illustrated), Fig. 7(b) illustrates a state of the jacket members attached to the slewing bearing, and Fig. 7(c) illustrates a sectional view of the slewing bearing to which the jacket members are attached.
   The first arrangement shown in Figs. 1 to 7 is an arrangement of a bearing in accordance with the present invention. The second arrangement, which is shown in Figs. 8 to 12 is an illustrative arrangement for facilitating the understanding of the present invention.
Fig. 8 is a view illustrating an appearance shape of a slewing bearing according to a second arrangement not part of the invention, wherein Fig. 8(a) in the figure illustrates a perspective view of an upper surface side, and Fig. 8(b) illustrates a sectional view cut along a central portion of the slewing bearing.

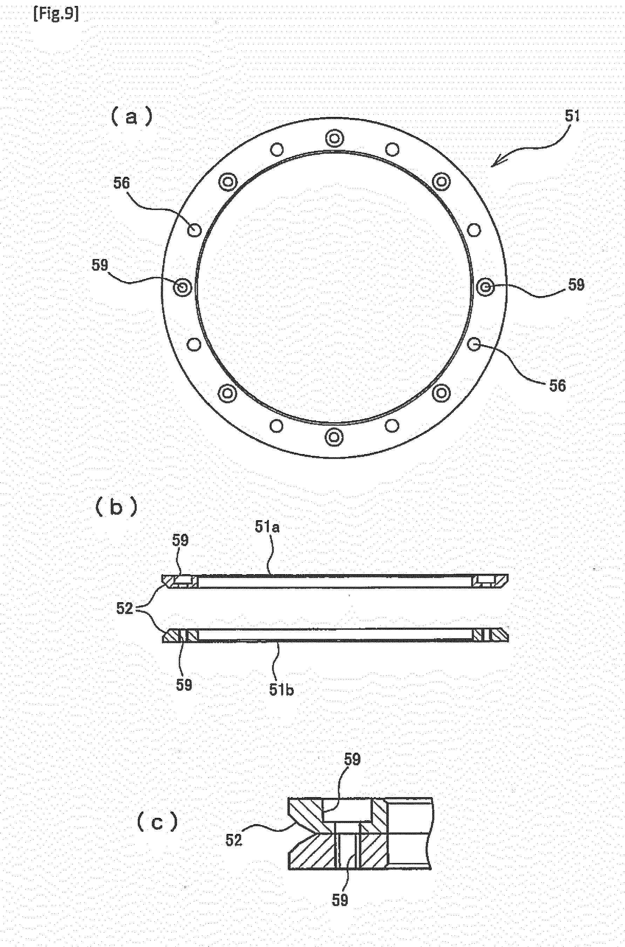

Fig. 9 is a view illustrating a single inner ring that constitutes the slewing bearing according to the second arrangement, wherein Fig. 9(a) in the figure illustrates a top view, Fig. 9(b) illustrates a sectional view cut along a central portion of the inner ring, and Fig. 9(c) illustrates an enlarged view of a main part of Fig. 9(b).

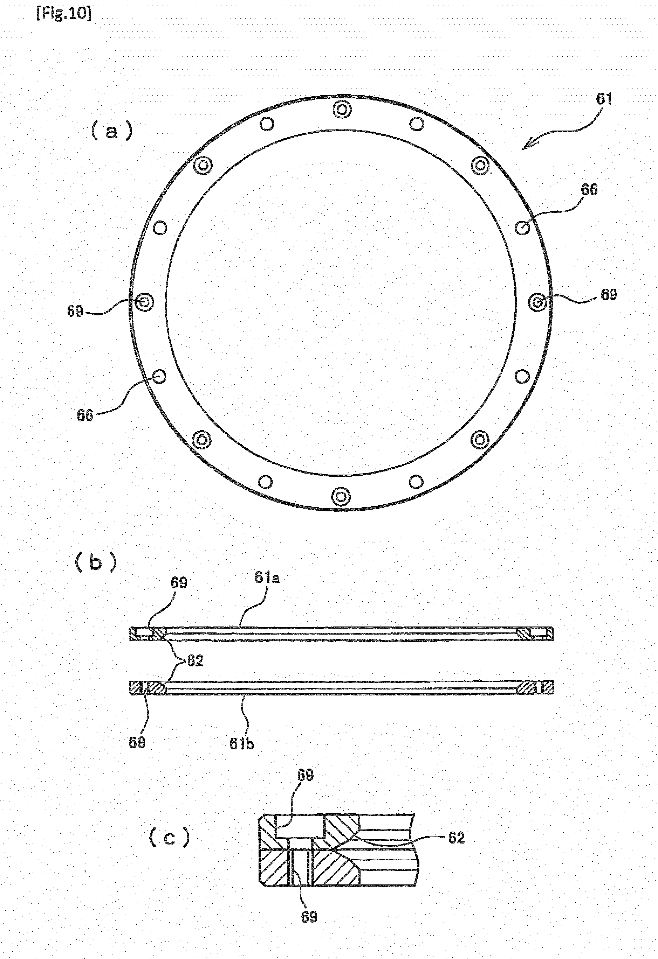

Fig. 10 is a view illustrating a single outer ring that constitutes the slewing bearing according to the second arrangement, wherein Fig. 10(a) in the figure illustrates a top view, Fig. 10(b) illustrates a sectional view cut along a central portion of the outer ring, and Fig. 10(c) illustrates an enlarged view of a main part of Fig. 10(b).

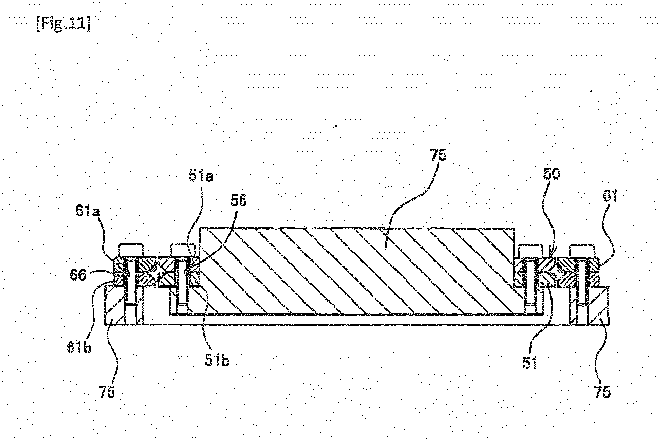

Fig. 11 is a view specifically illustrating an installation state when the slewing bearing 50 according to the second arrangement is used.

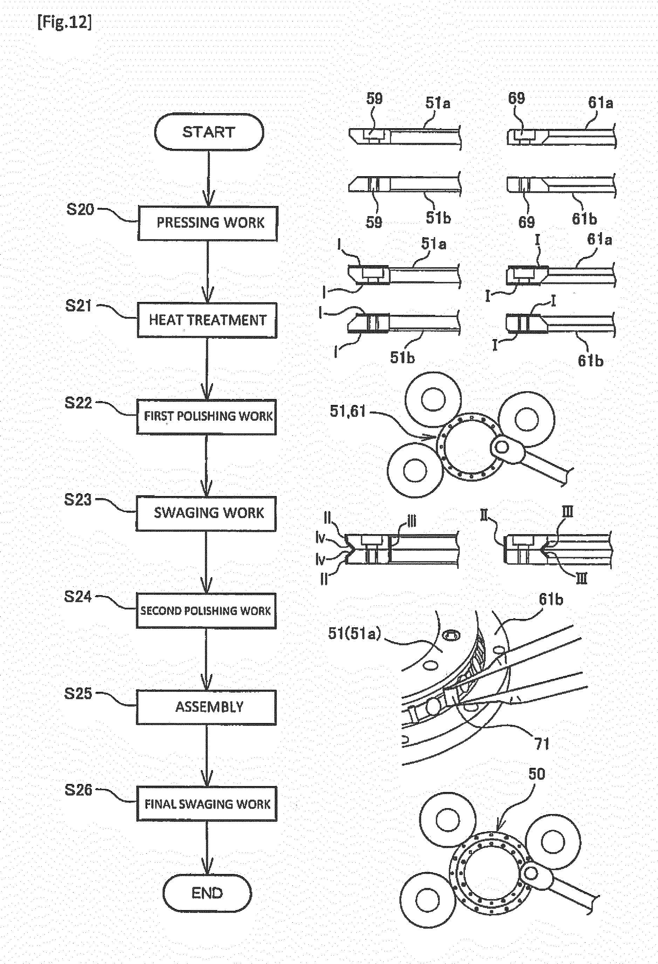

Fig. 12 is a view for describing a method of manufacturing the slewing bearing 50 according to the second arrangement, illustrating a flowchart indicating each process, and a schematic view for each process corresponding to this flowchart.

### MODE FOR CARRYING OUT THE INVENTION

Hereinafter, preferred arrangements for carrying out the present invention will be described with reference to the drawings. It should be noted that the following arrangements do not limit the invention according to each claim, and that all combinations of features described in each arrangement are not necessarily indispensable for the solving means of the invention.

### [FIRST ARRANGEMENT]

Fig. 1 is a view illustrating an appearance shape of a slewing bearing according to a first arrangement, wherein Fig. 1(a) in the figure illustrates a perspective view of an upper surface side, and Fig. 1(b) illustrates a perspective view of a bottom surface side. In addition, Fig. 2 is a cross-sectional view for describing a structure of the slewing bearing according to the first arrangement, wherein Fig. 2(a) in the figure illustrates a sectional view cut along a central portion of the slewing bearing, and Fig. 2(b) illustrates an enlarged view of a portion A in Fig. 2(a). Further, Fig. 3 is a view illustrating a single inner ring that constitutes the slewing bearing according to the first arrangement, wherein Fig. 3(a) in the figure illustrates a top view, Fig. 3(b) illustrates a side view, and Fig. 3(c) illustrates a sectional view cut along a central portion of the inner ring. Furthermore, Fig. 4 is a view illustrating a single outer ring that constitutes the slewing bearing according to the first arrangement, wherein Fig. 4(a) in the figure illustrates a top view, Fig. 4(b) illustrates a side view, and Fig. 4(c) illustrates a sectional view cut along a central portion of the outer ring.

As illustrated in Figs. 1 to 4, the slewing bearing 10 according to the first arrangement includes, as main component members, an inner ring 11 and an outer ring 21, and rollers 31 as a plurality of rolling elements disposed between the inner ring 11 and the outer ring 21.

The inner ring 11 includes an inner-ring-side roller-rolling surface 12 as an inner-ring-side rolling-element rolling surface, on an outer peripheral surface. Further, as illustrated in more detail in Fig. 3, the inner ring 11 is configured as a member having: a flat portion 13 serving as a mounting reference for attachment to an external member (not illustrated); an erected portion 14 erected in a direction perpendicular to the flat portion 13; and a curved portion 15 connecting the flat portion 13 and the erected portion 14. Such a contour shape of the inner ring 11 is formed by performing the pressing work on a single plate of bearing steel such as SUJ2, and such configuration and manufacturing method contribute to exertion of an effect of reducing manufacturing cost as compared with the conventional technology in which cutting work or the like has been performed on a block of bearing steel.

In addition, the inner-ring-side roller-rolling surface 12 is formed on a surface on an outer side of the erected portion 14 (an outer surface on right and left sides of the drawing in Figs. 3(b) and 3(c)). The inner-ring-side roller-rolling surface 12 is formed to have a substantially inverted L-shape in a sectional view, and is formed on the entire surface on the outer side of the erected portion 14. In addition, a plurality of mounting holes 16 is formed in the flat portion 13 serving as the mounting reference for attachment to an external member (not illustrated), and using a fastening means such as a bolt for these mounting holes 16 enables attachment of the inner ring 11 to the external member (not illustrated).

In the contour shape of the inner ring 11, removal processing such as grinding work is applied to portions requiring dimensional accuracy, that is, an outer side of the flat portion 13 (a lower side of the drawing in Figs. 3(b) and 3(c)), the surface on the outer side of the erected portion 14 (the outer surface on the right and left sides of the drawing in Figs. 3(b) and 3(c)), an end surface on an upper side of the erected portion 14 (right and left end surfaces on an upper side of the drawing in Figs. 3(b) and 3(c)), and the inner-ring-side roller-rolling surface 12 formed on the surface on the outer side of the erected portion 14 (the outer surface on the right and left sides of the drawing in Figs. 3(b) and 3(c)). That is, the inner ring 11 according to the first arrangement is a member configured to have combination of a press-worked part and a removal-processed part, by performing removal processing on a member having a contour shape formed by pressing work. Therefore, grinding work or the like is performed only on the portions requiring dimensional accuracy, and the contour shape at the other portions is defined by receiving the pressing work. In other words, the manufacturing cost can be reduced while the dimensional accuracy required as the inner ring 11 is maintained, allowing the inner ring 11 according to the first arrangement to adopt a structure that can be manufactured at low cost while maintaining a certain performance.

On the other hand, the outer ring 21 is a member having an outer-ring-side roller-rolling surface 22 as an outer-ring-side rolling-element rolling surface on an inner peripheral surface, and having the outer-ring-side roller-rolling surface 22 arranged on an outer side of the inner ring 11 to face the inner-ring-side roller-rolling surface 12 described above. Further, as illustrated in more detail in Fig. 4, the outer ring 21 is configured as a member having: a flat portion 23 serving as a mounting reference for attachment to an external member (not illustrated); an erected portion 24 erected in a direction perpendicular to the flat portion 23; and a curved portion 25 connecting the flat portion 23 and the erected portion 24. Such a contour shape of the outer ring 21 is formed by performing the pressing work on a single plate of bearing steel such as SUJ2, and such configuration and manufacturing method contribute to exertion of the effect of reducing manufacturing cost as compared with the conventional technology in which cutting work or the like has been performed on a block of bearing steel.

In addition, the outer-ring-side roller-rolling surface 22 is formed on a surface on an inner side of the erected portion 24 (an inner surface on right and left sides of the drawing in Figs. 4(b) and 4(c)). The outer-ring-side roller-rolling surface 22 is formed to have a substantially inverted L-shape in a sectional view, and is formed on the entire surface on the inner side of the erected portion 24. In addition, a plurality of mounting holes 26 is formed in the flat portion 23 serving as the mounting reference for attachment to an external member (not illustrated), and using a fastening means such as a bolt for these mounting holes 26 enables attachment of the outer ring 21 to the external member (not illustrated).

In the contour shape of the outer ring 21, removal processing such as grinding work is applied to portions requiring dimensional accuracy, that is, an outer side of the flat portion 23 (a lower side of the drawing in Figs. 4(b) and 4(c)), a surface on an outer side of the flat portion 23 (an end surface on right and left sides of the drawing in Figs. 4(b) and 4(c)), an end surface on an upper side of the erected portion 24 (right and left end surfaces on an upper side of the drawing in Figs. 4(b) and 4(c)), and the outer-ring-side roller-rolling surface 22 formed on the surface on the inner side of the erected portion 24 (the inner surface on the right and left sides of the drawing in Figs. 4(b) and 4(c)). That is, the outer ring 21 according to the first arrangement is a member configured to have combination of a press-worked part and a removal-processed part, by performing removal processing on a member having a contour shape formed by pressing work. Therefore, grinding work or the like is performed only on the portions requiring dimensional accuracy, and the contour shape at the other portions is defined by receiving the pressing work. In other words, the manufacturing cost can be reduced while the dimensional accuracy required as the outer ring 21 is maintained, allowing the outer ring 21 according to the first arrangement to adopt a structure that can be manufactured at low cost while maintaining a certain performance.

Moreover, in the outer ring 21, there is formed a dividing portion 27 that divides the outer-ring-side roller-rolling surface 22 formed on the inner peripheral surface and serves as an insertion part of a plurality of rollers 31. The dividing portion 27 is formed by applying a load to cut one portion of the ring-shaped outer ring 21, and splitting a part of the ring shape. Providing the dividing portion 27 to the outer ring 21 enables insertion of the plurality of rollers 31 into a roller-rolling passage 28 as a rolling-element rolling passage formed by the inner-ring-side roller-rolling surface 12 and the outer-ring-side roller-rolling surface 22. That is, although the dividing portion 27 is configured to be always closed by elasticity of a metal material constituting the outer ring 21, applying a force in a direction to open the dividing portion 27 within an elastic range of the metal material constituting the outer ring 21 forms a gap allowing the plurality of rollers 31 to be inserted into the roller-rolling passage 28, at a position of the dividing portion 27.

The rollers 31 as the plurality of rolling elements are members rollably disposed in the roller-rolling passage 28 formed by the inner-ring-side roller-rolling surface 12 and the outer-ring-side roller-rolling surface 22, and the rollers 31 are made of, for example, bearing steel such as SUJ2 similar to the metal material constituting the inner ring 11 and the outer ring 21. While receiving a force from the inner ring 11 and the outer ring 21 relatively rotating by receiving an external force from an external member (not illustrated) or the like, the rollers 31 serve to smoothly perform relative rotational movement of the outer ring 21 with respect to the inner ring 11. Further, for the rollers 31, it is possible to provide a resin-made roller alignment member 32, such as a spacer or a retainer, between the plurality of rollers 31 (see Fig. 2(b)). However, the slewing bearing according to the present invention may be configured only with the rollers 31 without providing a member such as a spacer or a retainer.

In the slewing bearing 10 according to the first arrangement formed by the above-described component members, the inner ring 11 disposed on an inner peripheral side and the outer ring 21 disposed on an outer peripheral side are configured to relatively rotate about an axis via the plurality of rollers 31 performing rolling motion, enabling transmission of a rotational force while suitably supporting an external member (not illustrated) attached to the inner ring 11 and the outer ring 21. Further, since the inner ring 11 and the outer ring 21 are configured such that removal processing is applied only to the portions requiring dimensional accuracy for a member having a contour shape formed by pressing work, the slewing bearing 10 according to the first arrangement has a configuration capable of greatly reducing the manufacturing cost as compared with slewing bearings according to the conventional technology. In addition, since installation of the plurality of rollers 31 is in a very simple configuration using the dividing portion 27 formed in the outer ring 21 and using the elasticity of the metal material constituting the outer ring 21, it is also possible to obtain the effect of significantly reducing the manufacturing cost with such a configuration, as compared with the conventional technology.

A specific configuration example of the slewing bearing 10 according to the first arrangement has been described above. Next, with additional reference to Fig. 5, a method of manufacturing the slewing bearing 10 according to the first arrangement will be described. Here, Fig. 5 is a view for describing the method of manufacturing the slewing bearing 10 according to the first arrangement, illustrating a flowchart indicating each process, and a schematic view for each process corresponding to this flowchart.

In the method of manufacturing the slewing bearing 10 according to the first arrangement, first, approximate contour shapes of the inner ring 11 and the outer ring 21 are formed by performing the pressing work on a single steel plate made of SUJ2 (step S10). However, for a portion not requiring dimensional accuracy, for example, the curved portions 15 and 25, a contour shape almost similar to a final shape is formed. In addition, while a circular opening portion existing inside the ring-shaped inner ring 11 and the ring-shaped outer ring 21 is also formed in this pressing work process (step S10), the pressing work performed in the pressing work process (step S10) may be completed by one pressing work, or may be completed by a plurality of times of pressing work.

Next, by performing turning work on each of the surface on the outer side of the erected portion 14 included in the inner ring 11 (the outer surface on the right and left sides of the drawing in Figs. 3(b) and 3(c)), and the surface on the inner side of the erected portion 24 included in the outer ring 21 (the inner surface on the right and left sides of the drawing in Figs. 4(b) and 4(c)), a turning work process for forming the inner-ring-side roller-rolling surface 12 and the outer-ring-side roller-rolling surface 22 is performed (step S11). In this turning work process (step S11), however, both of the rolling surfaces 12 and 22 are formed with a positive dimensional tolerance with respect to a final shape dimension, in consideration of an influence in a heat treatment process (step S12) to be performed next. In addition, a plurality of mounting holes 16 and 26 is also subjected to boring work at this stage, in the turning work process (step S11).

Subsequently, the heat treatment process is performed (step S12) to provide hardness required as the slewing bearing 10 to the inner ring 11 and the outer ring 21, and the pressing work process (step S10) and the turning work process (step S11) are performed to remove stress such as strain accumulated inside the material. Note that conditions of the heat treatment process (step S12) may be arbitrarily selected according to material conditions, such as a type and a shape of the metal material, specification conditions required as the slewing bearing, and the like.

Next, a grinding work process is performed (step S13) for performing grinding work on portions requiring dimensional accuracy, in the inner ring 11 and the outer ring 21. The final contour shapes of the inner ring 11 and the outer ring 21 are determined by this grinding work process (step S13). For reliably achieving the dimensional accuracy, the order of grinding points in the grinding work process (step S13) performed on the inner ring 11 and the outer ring 21 each is very important.

That is, as illustrated in detail in Fig. 5, in the inner ring 11, grinding work is performed first on a portion i in step S13 in Fig. 5, serving as a mounting reference for an external member (not illustrated), that is, the outer side of the flat portion 13 (the lower side of the drawing in Figs. 3(b) and 3(c)), and the end surface on the upper side of the erected portion 14 (the right and left end surfaces on the upper side of the drawing in Figs. 3(b) and 3(c)). Next, with reference to the portion i serving as the mounting reference for an external member (not illustrated), grinding work is performed on a portion ii, that is, on the surface on the outer side of the erected portion 14 (the outer surface on right and left sides of the drawing in Figs. 3(b) and 3(c)). Further, with reference to the portion ii, grinding work is performed on a portion iii, that is, on the surface on the inner side of the erected portion 14 (the surface on the inner side corresponding to the end surface on the right and left sides of the drawing in Figs. 3(b) and 3(c)). Finally, grinding work is performed on a portion iv, that is, on the inner-ring-side roller-rolling surface 12 formed on the surface on the outer side of the erected portion 14 (the outer surface on the right and left sides of the drawing in Figs. 3(b) and 3(c)). The contour shape of the inner ring 11 is formed with high dimensional accuracy by the grinding work in such a procedure, and the final contour shape as the inner ring 11 is formed.

On the other hand, in the outer ring 21, grinding work is performed first on a portion I in step S13 in Fig. 5, serving as a mounting reference for an external member (not illustrated), that is, the outer side of the flat portion 23 (the lower side of the drawing in Figs. 4(b) and 4(c)), and the end surface on the upper side of the erected portion 24 (the right and left end surfaces on the upper side of the drawing in Figs. 4(b) and 4(c)). Next, with reference to the portion I serving as the mounting reference for an external member (not illustrated), grinding work is performed on a portion II, that is, on the surface on the outer side of the flat portion 23 (the end surface on the right and left sides of the drawing in Figs. 4(b) and 4(c)). Finally, with reference to the portion II, grinding work is performed on a portion III, that is, on the outer-ring-side roller-rolling surface 22 formed on the surface on the inner side of the erected portion 24 (the inner surface on the right and left sides of the drawing in Figs. 4(b) and 4(c)). The contour shape of the outer ring 21 is formed with high dimensional accuracy by the grinding work in such a procedure, and the final contour shape as the outer ring 21 is formed.

After the shapes of the inner ring 11 and the outer ring 21 are formed by the above grinding work process (step S13), an outer-ring-splitting process is performed only on the outer ring 21 (step S14). This outer-ring-splitting process (step S14) is performed by applying a load to a portion, at which the dividing portion 27 is to be formed, toward a center of the outer ring from an outer side. Since the dividing portion 27 formed in such a way is formed as a fracture surface based on plastic deformation, the dividing portion 27 has a step or burr as it is. In particular, since the dividing portion 27 is formed so as to cut off the outer-ring-side roller-rolling surface 22 formed on the outer ring 21, a step and burr need to be eliminated. Therefore, in the outer-ring-splitting process (step S14), after forming the dividing portion 27, elimination of the step and a deburring process are performed by applying crowning processing to positions of the outer-ring-side roller-rolling surface 22 in front and rear of the dividing portion 27 by using a grinding stone. Such processing enables a smooth rolling operation of the plurality of rollers 31 even if there is the dividing portion 27 in a middle of the outer-ring-side roller-rolling surface 22.

Finally, an assembly process is performed (step S15). In this assembly process (step S15), the dividing portion 27 is opened by disposing the outer ring 21 on an outer peripheral side of the inner ring 11, and applying a force to the outer ring 21 in a direction to open the dividing portion 27. Then, the plurality of rollers 31 is inserted into the roller-rolling passage 28 from the position of the dividing portion 27. In inserting the rollers 31, it is also possible to additionally insert a resin-made roller alignment member 32, such as a retainer or a spacer. After all the rollers 31 and the like are inserted, and the rollers 31 and the like are disposed in the roller-rolling passage 28, releasing the force applied to the outer ring 21 in the direction to open the dividing portion 27 causes the dividing portion 27 to be closed with elasticity of the outer ring 21. Through the above processes, the slewing bearing 10 according to the first arrangement is completed.

Moreover, various accessories can be added to the slewing bearing 10 according to the first arrangement described above, according to application and the like. For example, as described above, since the dividing portion 27 is formed in the outer ring 21 according to the first arrangement, when a very large load is applied to the outer ring 21, the load is concentrated on the dividing portion 27 having a lowest strength in the outer ring 21. Therefore, it is preferable to provide an opening-prevention plate 41 to prevent the dividing portion 27 of the outer ring 21 from being opened. An example of such an opening-prevention plate 41 is illustrated in Fig. 6. Here, Fig. 6 is a view illustrating the opening-prevention plate applicable to the slewing bearing according to the first arrangement, wherein Fig. 6(a) in the figure illustrates an external perspective view of a single opening-prevention plate, Fig. 6(b) illustrates a state of the opening-prevention plate attached to the slewing bearing, and Fig. 6(c) illustrates a sectional view of the slewing bearing to which the opening-prevention plate is attached.

As illustrated in Fig. 6, the opening-prevention plate 41 is a ring-shaped member. In particular, as illustrated in Fig. 6(c), the opening-prevention plate 41 can be provided to be fitted with the end surface on the upper side of the erected portion 24 included in the outer ring 21. An action of this opening-prevention plate 41 fixes the outer ring 21 so as to maintain the outer dimension of the outer ring 21. That is, the opening-prevention plate 41 makes it possible to maintain a closed state of the dividing portion 27.

As another accessory, a jacket member 45 as illustrated in Fig. 7 may be provided to the slewing bearing 10. Here, Fig. 7 is a view illustrating a jacket member applicable to the slewing bearing according to the first arrangement, wherein Fig. 7(a) in the figure illustrates an external perspective view of jacket members alone (two jacket members for the inner ring and the outer ring are illustrated), Fig. 7(b) illustrates a state of the jacket members attached to the slewing bearing, and Fig. 7(c) illustrates a sectional view of the slewing bearing to which the jacket members are attached.

The jacket member 45 illustrated in Fig. 7 is formed by performing the pressing work on a thin metal plate. However, this jacket member 45 can be made of any material including resin and the like. The jacket member 45 can be fitted with the slewing bearing 10 or can be provided to be fixed by a fastening means such as a bolt. Applications of the jacket member 45 may include use as a decorative member to improve an appearance of the slewing bearing 10, and use as a member to fill a gap existing between the slewing bearing 10 and an external member to which this slewing bearing 10 is attached.

A specific configuration example and the method of manufacturing the slewing bearing 10 according to the first arrangement, and the example of a mode of the addable accessories have been described above. However, the technical scope of the present invention is not limited to the scope described in the first arrangement above. Various modifications or improvements can be added to the first arrangement above. Next, another arrangement of the slewing bearing according to the present invention will be described as a second arrangement.

### [SECOND ARRANGEMENT]

Fig. 8 is a view illustrating an appearance shape of a slewing bearing according to a second arrangement, wherein Fig. 8(a) in the figure illustrates a perspective view of an upper surface side, and Fig. 8(b) illustrates a sectional view cut along a central portion of the slewing bearing. Further, Fig. 9 is a view illustrating a single inner ring that constitutes the slewing bearing according to the second arrangement, wherein Fig. 9(a) in the figure illustrates a top view, Fig. 9(b) illustrates a sectional view cut along a central portion of the inner ring, and Fig. 9(c) illustrates an enlarged view of a main part of Fig. 9(b). Furthermore, Fig. 10 is a view illustrating a single outer ring that constitutes the slewing bearing according to the second arrangement, wherein Fig. 10(a) in the figure illustrates a top view, Fig. 10(b) illustrates a sectional view cut along a central portion of the outer ring, and Fig. 10(c) illustrates an enlarged view of a main part of Fig. 10(b).

As illustrated in Figs. 8 to 10, the slewing bearing 50 according to the second arrangement has, as main component members, an inner ring 51 and an outer ring 61, and rollers 71 as a plurality of rolling elements disposed between the inner ring 51 and the outer ring 61.

The inner ring 51 includes an inner-ring-side roller-rolling surface 52 as an inner-ring-side rolling-element rolling surface, on an outer peripheral surface. Further, as illustrated in more detail in Fig. 9, the inner ring 51 is a member formed by combining an upper inner-ring split body 51a and a lower inner-ring split body 51b that have an annular plate shape divided into two upper and lower parts. On a lower side of an outer periphery of the upper inner-ring split body 51a, there is formed an upper half of the inner-ring-side roller-rolling surface 52 having a substantially inverted L-shape in a sectional view, whereas on an upper side of an outer periphery of the lower inner-ring split body 51b, there is formed a lower half of the inner-ring-side roller-rolling surface 52 having a substantially inverted L-shape in a sectional view. Furthermore, an assembly hole 59 is formed in each of the upper inner-ring split body 51a and the lower inner-ring split body 51b, and the inner ring 51 is formed by fixing the upper inner-ring split body 51a and the lower inner-ring split body 51b with a fastening means such as a bolt, using the assembly hole 59. Such a contour shape of the inner ring 51 is formed by performing the pressing work on a single plate of bearing steel such as SUJ2, and such configuration and manufacturing method contribute to exertion of the effect of reducing manufacturing cost as compared with the conventional technology in which cutting work or the like has been performed on a block of bearing steel. Moreover, in the inner ring 51, in addition to the assembly hole 59, there is formed a plurality of mounting holes 56 to attach the inner ring 51 to an external member (not illustrated), and using a fastening means such as a bolt for the plurality of mounting holes 56 enables attachment of the inner ring 51 to the external member (not illustrated).

In the contour shape of the inner ring 51 described above, removal processing such as polishing work is applied to portions requiring dimensional accuracy, that is, upper and lower surfaces of the inner ring 51 (surfaces on both upper and lower sides of the drawing in Fig. 9(b)), a surface on an outer side of the inner ring 51 (an outer surface on right and left sides of the drawing in Fig. 9(b)), a surface on an inner side of the inner ring 51 (an inner surface on the right and left sides of the drawing in Fig. 9(b)), and the inner-ring-side roller-rolling surface 52 formed on the surface on the outer side of the inner ring 51 (the outer surface on the right and left sides of the drawing in Fig. 9(b)). That is, the inner ring 51 according to the second arrangement is a member configured to have combination of a press-worked part and a removal-processed part, by performing removal processing on a member having a contour shape formed by pressing work. Therefore, polishing work or the like is performed only on the portions requiring dimensional accuracy, and the contour shape at the other portions is defined by receiving the pressing work. In other words, the manufacturing cost can be reduced while the dimensional accuracy required as the inner ring 51 is maintained, allowing the inner ring 51 according to the second arrangement to adopt a structure that can be manufactured at low cost while maintaining a certain performance.

On the other hand, the outer ring 61 includes an outer-ring-side roller-rolling surface 62 as an outer-ring-side rolling-element rolling surface, on an inner peripheral surface. Further, as illustrated in more detail in Fig. 10, the outer ring 61 is a member formed by combining an upper outer-ring split body 61a and a lower outer-ring split body 61b that have an annular plate shape divided into two upper and lower parts. On a lower side of an inner periphery of the upper outer-ring split body 61a, there is formed an upper half of the outer-ring-side roller-rolling surface 62 having a substantially inverted L-shape in a sectional view, whereas on an upper side of an inner periphery of the lower outer-ring split body 61b, there is formed a lower half of the outer-ring-side roller-rolling surface 62 having a substantially inverted L-shape in a sectional view. Furthermore, an assembly hole 69 is formed in each of the upper outer-ring split body 61a and the lower outer-ring split body 61b, and the outer ring 61 is formed by fixing the upper outer-ring split body 61a and the lower outer-ring split body 61b with a fastening means such as a bolt, using the assembly hole 69. Such a contour shape of the outer ring 61 is formed by performing the pressing work on a single plate of bearing steel such as SUJ2, and such configuration and manufacturing method contribute to exertion of the effect of reducing manufacturing cost as compared with the conventional technology in which cutting work or the like has been performed on a block of bearing steel. Moreover, in the outer ring 61, in addition to the assembly hole 69, there is formed a plurality of mounting holes 66 to attach the outer ring 61 to an external member (not illustrated), and using a fastening means such as a bolt for the plurality of mounting holes 66 enables attachment of the outer ring 61 to the external member (not illustrated).

In the contour shape of the outer ring 61 described above, removal processing such as polishing work is applied to portions requiring dimensional accuracy, that is, upper and lower surfaces of the outer ring 61 (surfaces on both upper and lower sides of the drawing in Fig. 10(b)), a surface on an outer side of the outer ring 61 (an outer surface on right and left sides of the drawing in Fig. 10(b)), and the outer-ring-side roller-rolling surface 62 formed on the surface on the inner side of the outer ring 61 (an inner surface on the right and left sides of the drawing in Fig. 10(b)). That is, the outer ring 61 according to the second arrangement is a member configured to have combination of a press-worked part and a removal-processed part, by performing removal processing on a member having a contour shape formed by pressing work. Therefore, polishing work or the like is performed only on the portions requiring dimensional accuracy, and the contour shape at the other portions is defined by receiving the pressing work. In other words, the manufacturing cost can be reduced while the dimensional accuracy required as the outer ring 61 is maintained, allowing the outer ring 61 according to the second arrangement to adopt a structure that can be manufactured at low cost while maintaining a certain performance.

Note that the outer ring 61 according to the second arrangement does not need the dividing portion 67 formed in the above-described first arrangement. For insertion of a plurality of rollers 71 into a roller-rolling passage 68 as a rolling-element rolling passage formed by the inner-ring-side roller-rolling surface 52 and the outer-ring-side roller-rolling surface 62, for example, after releasing the assembly of the upper outer-ring split body 61a and the lower outer-ring split body 61b that constitute the outer ring 61, the rollers 71 only need to be inserted while the upper outer-ring split body 61a is removed.

Moreover, the rollers 71 as the plurality of rolling elements are members rollably disposed in the roller-rolling passage 68 formed by the inner-ring-side roller-rolling surface 52 and the outer-ring-side roller-rolling surface 62, and the rollers 71 are made of, for example, bearing steel such as SUJ2 similar to the metal material constituting the inner ring 51 and the outer ring 61. While receiving a force from the inner ring 51 and the outer ring 61 relatively rotating by receiving an external force from an external member (not illustrated) or the like, the roller 71 serves to smoothly perform relative rotational movement of the outer ring 61 with respect to the inner ring 51. Further, for the rollers 71, it is possible to provide a resin-made roller alignment member 32, such as a spacer or a retainer, between the plurality of rollers 71 (as in Fig. 2(b)). However, the slewing bearing may be configured only with the rollers 71 without providing a member such as a spacer or a retainer.

In the slewing bearing 50 according to the second arrangement formed by the above-described component members, the inner ring 51 disposed on an inner peripheral side and the outer ring 61 disposed on an outer peripheral side are configured to relatively rotate about an axis via the plurality of rollers 71 performing rolling motion, enabling transmission of a rotational force while suitably supporting an external member (not illustrated) attached to the inner ring 51 and the outer ring 61. Further, since the inner ring 51 and the outer ring 61 are configured such that removal processing is applied only to the portions requiring dimensional accuracy for a member having a contour shape formed by pressing work, the slewing bearing 50 according to the second arrangement has a configuration capable of greatly reducing the manufacturing cost as compared with slewing bearings according to the conventional technology. In addition, since the plurality of rollers 71 may be installed by dividing either one of the outer ring 61 or the inner ring 51, formed as a split body divided into the two upper and lower parts, it is also possible to obtain the effect of significantly reducing the manufacturing cost with such a configuration, as compared with the conventional technology.

Fig. 11 is a view specifically illustrating an installation state when the slewing bearing 50 according to the second arrangement is used. As illustrated in Fig. 11, by attaching the inner ring 51 and the outer ring 61 to an external member 75 by using the plurality of mounting holes 56 and 66 formed in the inner ring 51 and the outer ring 61, the slewing bearing 50 according to the second arrangement can transmit the rotational force while suitably supporting the external member 75.

A specific configuration example of the slewing bearing 50 according to the second arrangement has been described above. Next, with additional reference to Fig. 12, a method of manufacturing the slewing bearing 50 according to the second arrangement will be described. Here, Fig. 12 is a view for describing the method of manufacturing the slewing bearing 50 according to the second arrangement, illustrating a flowchart indicating each process, and a schematic view for each process corresponding to this flowchart.

In the method of manufacturing the slewing bearing 50 according to the second arrangement, a pressing work process is first performed (step S20) for forming approximate contour shapes of the upper inner-ring split body 51a and the lower inner-ring split body 51b that constitute the inner ring 51, and the upper outer-ring split body 61a and the lower outer-ring split body 61b that constitute the outer ring 61, by performing the pressing work on a single steel sheet made of SUJ2. However, for a portion not requiring dimensional accuracy, for example, a portion other than the outer-ring-side roller-rolling surface 62 formed on the surface on the inner side of the outer ring 61 (the inner surface on the right and left sides of the drawing in Fig. 10(b)), a contour shape almost similar to a final shape is formed. In addition, while a circular opening portion existing inside the ring-shaped inner ring 51 and the ring-shaped outer ring 61 is also formed in this pressing work process (step S20), the pressing work performed in the pressing work process (step S20) may be completed by one pressing work, or may be completed by a plurality of times of pressing work. Further, the plurality of mounting holes 56 and 66 and assembly holes 59 and 69 are also subjected to boring work at this stage, in the pressing work process (step S20).

Subsequently, the heat treatment process (step S21) is performed to provide hardness required as the slewing bearing 50, to each of the upper inner-ring split body 51a and the lower inner-ring split body 51b that constitute the inner ring 51, and the upper outer-ring split body 61a and the lower outer-ring split body 61b that constitute the outer ring 61, and the pressing work process (step S20) is performed to remove stress such as strain accumulated inside the material. Note that conditions of the heat treatment process (step S21) may be arbitrarily selected according to material conditions, such as a type and a shape of the metal material, specification conditions required as the slewing bearing, and the like.

Next, in the inner ring 51, polishing work is performed on a portion i in step S22 in Fig. 12, serving as a mounting reference for an external member (not illustrated), that is, an upper surface of the upper inner-ring split body 51a (a surface on an upper side of the drawing in Fig. 9(b)), and a lower surface of the lower inner-ring split body 51b (a surface on a lower side of the drawing in Fig. 9(b)), constituting the inner ring 51. Further, in the outer ring 61, polishing work is performed on a portion I in step S22 in Fig. 12, serving as a mounting reference for an external member (not illustrated), that is, an upper surface of the upper outer-ring split body 61a (a surface on an upper side of the drawing in Fig. 10(b)), and a lower surface of the lower outer-ring split body 61b (a surface on a lower side of the drawing in Fig. 10(b)), constituting the outer ring 61. Performing the above first polishing work process (step S22) causes formation of upper and lower surfaces of the inner ring 51 and the outer ring 61, serving as the mounting reference for an external member (not illustrated).

Subsequently, a swaging work process is performed (step S23) to assemble the upper inner-ring split body 51a and the lower inner-ring split body 51b that constitute the inner ring 51, and assemble the upper outer-ring split body 61a and the lower outer-ring split body 61b that constitute the outer ring 61. In addition, as described above, these assembling operations are performed by fixing each of the split bodies with a fastening means such as a bolt using the assembly holes 59 and 69.

Next, the final contour shapes of the inner ring 51 and the outer ring 61 are formed by a second polishing work process (step S24). Specifically, in the inner ring 51, with reference to the portion i serving as the mounting reference for an external member (not illustrated), polishing work is performed on a portion ii, that is, on the surface on the outer side of the inner ring 51 (the outer surface on the right and left sides of the drawing in Fig. 9(b)). Further, with reference to the portion ii, polishing work is performed on a portion iii, that is, on the surface on the inner side of the inner ring 51 (the inner surface on the right and left sides of the drawing in Fig. 9(b)). Finally, polishing work is performed on a portion iv, that is, on the inner-ring-side roller-rolling surface 52 formed on the surface on the outer side of the inner ring 51 (the outer surface on the right and left sides of the drawing in Fig. 9(b)). The contour shape of the inner ring 51 is formed with high dimensional accuracy by the polishing work in such a procedure, and the final contour shape as the inner ring 51 is formed.

Meanwhile, in the outer ring 61, with reference to the portion I serving as the mounting reference for an external member (not illustrated), polishing work is performed on a portion II, that is, on the surface on the outer side of the outer ring 61 (the outer surface on the right and left sides of the drawing in Fig. 10(b)). Further, with reference to the portion II, polishing work is performed on a portion III, that is, on the outer-ring-side roller-rolling surface 62 formed on the surface on the inner side of the outer ring 61 (the inner surface on the right and left sides of the drawing in Fig. 10(b)). The contour shape of the outer ring 61 is formed with high dimensional accuracy by the polishing work in such a procedure, and the final contour shape as the outer ring 61 is formed.

After the shapes of the inner ring 51 and the outer ring 61 are formed by the second polishing work process (step S24) above, the assembly process (step S25) is performed. That is, only the outer ring 61 is disassembled once to remove the upper outer-ring split body 61a, and the plurality of rollers 71 is inserted into the opened roller-rolling passage 68. In inserting the rollers 71, it is also possible to additionally insert a resin-made roller alignment member, such as a retainer or a spacer. After all the rollers 71 and the like are inserted, and the rollers 71 and the like are disposed in the roller-rolling passage 68, a final swaging work process (step S26) is performed for assembling the upper outer-ring split body 61a, to complete the slewing bearing 50 according to the second arrangement. Moreover, in the final swaging work process (step S26), final manufacturing of the slewing bearing 50 according to the second arrangement is completed by adjusting and checking an assembled state of the inner ring 51, in addition to the outer ring 61.

Although the preferred arrangement of the present invention have been described above, the technical scope of the present invention is not limited to the scope described in each of the above arrangements. Various modifications or improvements can be added to the arrangements within the scope of the appended claims.

For example, in each of the arrangements described above, it has been exemplified that the "removal processing" according to the present invention includes turning work, grinding work, and polishing work. However, the "removal processing" according to the present invention is not limited only to the above-described processing method, but any publicly known removal processing techniques can be used. For example, there can be used any techniques such as drill processing using a tool such as a drill, and cutting work using other tools.

In the slewing bearing 10 according to the first arrangement described above, a configuration has been exemplified where both the inner ring 11 and the outer ring 21 have the curved portions 15 and 25, and the curved portion 15 of the inner ring 11 and the curved portion 25 of the outer ring 21 are arranged facing each other. However, the scope of the present invention is not limited only to the mode with the curved portions 15 and 25 arranged facing each other. For example, it is possible to adopt a mode with the outer ring 21 arranged in an inverted manner with respect to the inner ring 11 according to the first arrangement, and the curved portion 15 of the inner ring 11 and the curved portion 25 of the outer ring 21 arranged not facing each other.

Further, in the slewing bearing 50 according to the second arrangement described above, each of the inner ring 51 and the outer ring 61 is configured by combining two flat plate members. However, the number of the members constituting the inner ring 51 and the outer ring 61 may be three or more. That is, the inner ring or the outer ring according to the present invention can be constituted by combining a plurality of flat plate members.

Further, it is also possible to adopt a configuration obtained by combining the slewing bearing 10 according to the first arrangement and the slewing bearing 50 according to the second arrangement described above. That is, either one of the inner ring and the outer ring may be formed by combining a plurality of flat plate members, while the other one of the inner ring and the outer ring may be formed to have a flat portion serving as a mounting reference for attachment to an external member, an erected portion erected in a direction perpendicular to the flat portion, and a curved portion connecting the flat portion and the erected portion. That is, the slewing bearing may be formed by combining the inner ring 11 according to the first arrangement and the outer ring 61 according to the second arrangement, or conversely, may be formed by combining the inner ring 51 according to the second arrangement and the outer ring 21 according to the first arrangement.

In addition, the shapes, the positions, and the numbers of the plurality of mounting holes 16, 26, 56, and 66 and the assembly holes 59 and 69 described in each of the above-described arrangements can be arbitrarily changed.

Further, regarding the plurality of rolling elements described in each of the above-described arrangements, cases of the rollers 31 and 71 have been exemplified and described. However, as the rolling elements applicable to the slewing bearing according to the present invention, any conventionally publicly known rolling elements such as balls and rollers can be applied.

The present invention is defined within the scope of the claims.

### REFERENCE NUMERALS

10, 50: slewing bearing, 11, 51: inner ring, 12, 52: inner-ring-side roller-rolling surface, 13, 23: flat portion, 14, 24: erected portion, 15, 25: curved portion, 16, 26, 56, 66: mounting hole, 21, 61: outer ring, 22, 62: outer-ring-side roller-rolling surface, 27: dividing portion, 28, 68: roller-rolling passage, 31, 71: roller, 32: roller alignment member, 41: opening-prevention plate, 45: jacket member, 51a: upper inner-ring split body, 51b: lower inner-ring split body, 59, 69: assembly hole, 61a: upper outer-ring split body, 61b: lower outer-ring split body, 75: external member.

## Claims

1. A slewing bearing (10, 50) comprising:
an inner ring (11, 51) having an inner-ring-side rolling-element rolling surface (12, 52) on an outer peripheral surface;
an outer ring (21, 61) having an outer-ring-side rolling-element rolling surface (22, 62) on an inner peripheral surface, and being arranged outside the inner ring (11, 51) such that the outer-ring-side rolling-element rolling surface (22, 62) faces the inner-ring-side rolling-element rolling surface (12, 52); and
a plurality of rolling elements (31, 71) rollably disposed on a rolling-element rolling passage (28, 68) formed by the inner-ring-side rolling-element rolling surface (12, 52) and the outer-ring-side rolling-element rolling surface (22, 62), wherein
the inner ring (11, 51) or the outer ring (21, 61) is configured to have combination of a press-worked part having a contour shape formed by pressing work, and a removal-processed part including at least the inner-ring-side rolling-element rolling surface (12, 52) or the outer-ring-side rolling-element rolling surface (22, 62), formed by removal processing, wherein
the inner ring (11, 51) or the outer ring (21, 61) includes:
a flat portion (13, 23) serving as a mounting reference for attachment to an external member;
an erected portion (14, 24); and
a curved portion (15, 25) connecting the flat portion (13, 23) and the erected portion (14, 24), and the inner-ring-side rolling-element rolling surface (12, 52) or the outer-ring-side rolling-element rolling surface (22, 62) is formed on the erected portion (14, 24);
**characterised in that**
the erected portion (14, 24) is erected in a direction perpendicular to the flat portion (13, 23).

2. The slewing bearing (10, 50) according to claim 1, wherein
the curved portion (15, 25) is configured as the press-worked part.

3. The slewing bearing (10, 50) according to claim 1 or 2, wherein
both of the inner ring (11, 51) and the outer ring (21, 61) include the curved portion (15, 25), and the curved portion (15, 25) included in the inner ring (11, 51) and the curved portion (15, 25) included in the outer ring (21, 61) are arranged to face each other.

4. The slewing bearing (10, 50) according to any one of claims 1 to 3, wherein
the outer ring (21, 61) has a dividing portion (27) that divides the outer-ring-side rolling-element rolling surface (22, 62) formed on the inner peripheral surface, and serves as an insertion part of the plurality of rolling elements (31, 71),
the plurality of rolling elements (31, 71) is capable of being inserted into the rolling-element rolling passage (28, 68) by opening the dividing portion (27) within an elastic range of a metal material constituting the outer ring (21, 61),
the dividing portion (27) is configured to be always closed by elasticity of the metal material constituting the outer ring (21, 61), and
an opening-prevention plate (44) attached to the outer ring (21, 61) is further provided in order to maintain a state of the dividing portion (27) being closed.

5. The slewing bearing (10, 50) according to claim 1, wherein
the inner ring (11, 51) or the outer ring (21, 61) is formed by combining a plurality of flat plate members.

6. The slewing bearing (10, 50) according to claim 1, wherein
either one of the inner ring (11, 51) or the outer ring (21, 61) is formed by combining a plurality of flat plate members, and
another one of the inner ring (11, 51) or the outer ring (21, 61) includes:
a flat portion (13, 23) serving as a mounting reference for attachment to an external member;
an erected portion (14, 24) erected in a direction perpendicular to the flat portion (13, 23); and
a curved portion (15, 25) connecting the flat portion (13, 23) and the erected portion (14, 24).

7. The slewing bearing (10, 50) according to any one of claims 1 to 3 and 6, wherein
a plurality of mounting holes (16, 26, 56, 66) serving as an attachment means to attach the inner ring (11, 51) or the outer ring (21, 61) to an external member is formed in the flat portion (13, 23).

## Patentansprüche

1. Großwälzlager (10, 50), umfassend:
einen Innenring (11, 51) mit einer innenringseitigen Wälzkörper-Rollfläche (12, 52) auf einer äußeren Umfangsfläche;
einen Außenring (21, 61) mit einer außenringseitigen Wälzkörper-Rollfläche (22, 62) auf einer inneren Umfangsfläche, und der außerhalb des Innenrings (11, 51) so angeordnet, dass die außenringseitige Wälzkörper-Rollfläche (22, 62) der innenringseitigen Wälzkörper-Rollfläche (12, 52) zugewandt ist; und
eine Vielzahl von Wälzkörpern (31, 71), die rollbar auf einer Wälzkörperpassage (28, 68) angeordnet sind, die durch die innenringseitige Wälzkörper-Rollfläche (12, 52) und die außenringseitige Wälzkörper-Rollfläche (22, 62) gebildet wird, wobei
der Innenring (11, 51) oder der Außenring (21, 61) konfiguriert ist, um eine Kombination aus einem gepressten Teil mit einer durch Verpressung gebildeten Konturform und einem entfernungsbearbeiteten Teil zu haben, der mindestens die innenringseitige Wälzkörper-Rollfläche (12, 52) oder die außenringseitige Wälzkörper-Rollfläche (22, 62) beinhaltet, und der durch Entfernungsbearbeitung gebildet ist, wobei
der Innenring (11, 51) oder der Außenring (21, 61) beinhaltet:
einen flachen Abschnitt (13, 23), der als Montagereferenz für die Befestigung an einem externen Element dient;
einen aufgerichteten Abschnitt (14, 24); und
einen gekrümmten Abschnitt (15, 25), der den flachen Abschnitt (13, 23) und den aufgerichteten Abschnitt (14, 24) verbindet, und
die innenringseitige Wälzkörper-Rollfläche (12, 52) oder die außenringseitige Wälzkörper-Rollfläche (22, 62) auf dem aufgerichteten Abschnitt (14, 24) ausgebildet ist,
**dadurch gekennzeichnet, dass**
der aufgerichtete Abschnitt (14, 24) in einer Richtung senkrecht zu dem flachen Abschnitt (13, 23) aufgerichtet ist.

2. Das Großwälzlager (10, 50) nach Anspruch 1, wobei
der gekrümmte Abschnitt (15, 25) als der gepresste Teil konfiguriert ist.

3. Das Großwälzlager (10, 50) nach Anspruch 1 oder 2, wobei
sowohl der Innenring (11, 51) als auch der Außenring (21, 61) den gekrümmten Abschnitt (15, 25) aufweisen und
der gekrümmte Abschnitt (15, 25), der in dem Innenring (11, 51) enthalten ist, und der gekrümmte Abschnitt (15, 25), der in dem Außenring (21, 61) enthalten ist, einander zugewandt angeordnet sind.

4. Das Großwälzlager (10, 50) nach einem der Ansprüche 1 bis 3, wobei
der Außenring (21, 61) einen Teilungsabschnitt (27) aufweist, der die auf der inneren Umfangsfläche gebildete außenringseitige Wälzkörper-Rollfläche (22, 62) teilt und als Einführungsteil der Vielzahl von Wälzkörpern (31, 71) dient,
die Vielzahl von Wälzkörpern (31, 71) in die Wälzkörperpassage (28, 68) eingesetzt werden kann, indem der Teilungsabschnitt (27) innerhalb eines elastischen Bereichs eines den Außenring (21, 61) bildenden Metallmaterials geöffnet wird,
der Teilungsabschnitt (27) so konfiguriert ist, dass er immer durch die Elastizität des den Außenring (21, 61) bildenden Metallmaterials geschlossen ist, und
eine am Außenring (21, 61) befestigte Öffnungsschutzplatte (44) ferner vorgesehen ist, um einen Zustand des geschlossenen Teilungsabschnitts (27) aufrechtzuerhalten.

5. Das Großwälzlager (10, 50) nach Anspruch 1, wobei
der Innenring (11, 51) oder der Außenring (21, 61) durch Kombinieren einer Vielzahl von flachen Plattenelementen gebildet ist.

6. Das Großwälzlager (10, 50) nach Anspruch 1, wobei
entweder einer des Innenrings (11, 51) oder des Außenrings (21, 61) durch Kombinieren einer Vielzahl von flachen Plattenelementen gebildet ist, und
ein anderer des Innenrings (11, 51) oder des Außenrings (21, 61) beinhaltet:
einen flachen Abschnitt (13, 23), der als Montagereferenz für die Befestigung an einem externen Element dient;
einen aufgerichteten Abschnitt (14, 24), der in einer Richtung senkrecht zu dem flachen Abschnitt (13, 23) aufgerichtet ist; und
einen gekrümmten Abschnitt (15, 25), der den flachen Abschnitt (13, 23) und den aufgerichteten Abschnitt (14, 24) verbindet.

7. Das Großwälzlager (10, 50) nach einem der Ansprüche 1 bis 3 und 6, wobei
eine Vielzahl von Befestigungslöchern (16, 26, 56, 66), die als Befestigungsmittel dienen, um den Innenring (11, 51) oder den Außenring (21, 61) an einem externen Element zu befestigen, in dem flachen Abschnitt (13, 23) ausgebildet ist.

## Revendications

1. Roulement d'orientation (10, 50) comprenant :
une couronne intérieure (11, 51) qui présente une surface de roulement pour éléments roulants côté couronne intérieure (12, 52) sur une surface périphérique externe ;
une couronne extérieure (21, 61) qui présente une surface de roulement pour éléments roulants côté couronne extérieure (22, 62) sur une surface périphérique interne, et qui est disposée à l'extérieur de la couronne intérieure (11, 51) de sorte que la surface de roulement pour éléments roulants côté couronne extérieure (22, 62) soit située face à la surface de roulement pour éléments roulants côté couronne intérieure (12, 52) ; et
une pluralité d'éléments roulants (31, 71) disposés de manière à pouvoir rouler sur un passage de roulement d'éléments roulants (28, 68) formé par la surface de roulement pour éléments roulants côté couronne intérieure (12, 52) et la surface de roulement pour éléments roulants côté couronne extérieure (22, 62), dans lequel
la couronne intérieure (11, 51) ou la couronne extérieure (21, 61) est configurée pour comprendre une combinaison d'une partie travaillée à la presse présentant un contour profilé par travail à la presse et une partie traitée par enlèvement incluant au moins la surface de roulement pour éléments roulants côté couronne intérieure (12, 52) ou la surface de roulement pour éléments roulants côté couronne extérieure (22, 62), formée par un traitement d'enlèvement, dans lequel
la couronne intérieure (11, 51) ou la couronne extérieure (21, 61) comprend :
une partie plate (13, 23) servant de référence de montage pour la fixation sur un élément extérieur ;
une partie dressée (14, 24) ; et
une partie courbe (15, 25) qui relie la partie plate (13, 23) et la partie dressée (14, 24), et
la surface de roulement pour éléments roulants côté couronne intérieure (12, 52) ou la surface de roulement pour éléments roulants côté couronne extérieure (22, 62) est formée sur la partie dressée (14, 24) ;
**caractérisé en ce que** la partie dressée (14, 24) est dressée dans une direction perpendiculaire à la partie plate (13, 23).

2. Roulement d'orientation (10, 50) selon la revendication 1, dans lequel
la partie courbe (15, 25) est configurée en tant que partie travaillée à la presse.

3. Roulement d'orientation (10, 50) selon la revendication 1 ou 2, dans lequel
la couronne intérieure (11, 51) et la couronne extérieure (21, 61) sont toutes les deux pourvues de la partie courbe (15, 25), et
la partie courbe (15, 25) incluse dans la couronne intérieure (11, 51) et la partie courbe (15, 25) incluse dans la couronne extérieure (21, 61) sont agencées de manière à se faire face.

4. Roulement d'orientation (10, 50) selon l'une quelconque des revendications 1 à 3, dans lequel
la couronne extérieure (21, 61) comporte une partie de séparation (27) qui sépare la surface de roulement pour éléments roulants côté couronne extérieure (22, 62), formée sur la surface périphérique interne, et qui sert de partie d'insertion de la pluralité d'éléments roulants (31, 71),
la pluralité d'éléments roulants (31, 71) peut être insérée dans le passage de roulement d'éléments roulants (28, 68) en ouvrant la partie de séparation (27) dans les limites d'une plage élastique d'un matériau métallique constituant la couronne extérieure (21, 61),
la partie de séparation (27) est configurée pour être toujours fermée sous l'effet de l'élasticité du matériau métallique constituant la couronne extérieure (21, 61), et
une plaque empêchant l'ouverture (44) fixée sur la couronne extérieure (21, 61) est en outre prévue pour maintenir la partie de séparation (27) à l'état fermé.

5. Roulement d'orientation (10, 50) selon la revendication 1, dans lequel
la couronne intérieure (11, 51) ou la couronne extérieure (21, 61) est formée en combinant une pluralité d'éléments en forme de plaque plats.

6. Roulement d'orientation (10, 50) selon la revendication 1, dans lequel
l'une des couronnes, soit la couronne intérieure (11, 51), soit la couronne extérieure (21, 61), est formée en combinant une pluralité d'éléments en forme de plaque plats, et
l'autre couronne, la couronne extérieure (21, 61) ou la couronne intérieure (11, 51), comprend :
une partie plate (13, 23) servant de référence de montage pour la fixation sur un élément extérieur ;
une partie dressée (14, 24) dressée dans une direction perpendiculaire à la partie plate (13, 23) ; et
une partie courbe (15, 25) qui relie la partie plate (13, 23) et la partie dressée (14, 24).

7. Roulement d'orientation (10, 50) selon l'une quelconque des revendications 1 à 3 et 6, dans lequel
une pluralité de trous de montage (16, 26, 56, 66) servant de moyen de fixation pour fixer la couronne intérieure (11, 51) ou la couronne extérieure (21, 61) sur un élément extérieur est formée dans la partie plate (13, 23).
